# EUROPÄISCHE PATENTANMELDUNG

(11) **EP 3 235 765 A1**
(43) Veröffentlichungstag der Anmeldung: **25.10.2017**
(21) Anmeldenummer: 17163530.3
(22) Anmeldetag: 29.03.2017
(51) Int. Cl.: B65G 47/84

(54) **ENTLADESTATION EINER FÖRDERVORRICHTUNG UND FÖRDERVORRICHTUNG**

(30) Priorität: 22.04.2016 DE 202016102162 U
(71) Anmelder: Dematic GmbH, 63150 Heusenstamm (DE)
(72) Erfinder: Thomas, Otto, 33659 Bielefeld (DE)
(74) Vertreter: Moser Götze & Partner Patentanwälte mbB

(57) **Zusammenfassung**

Entladestation (1) einer Fördervorrichtung für entlang einer Förderstrecke verfahrbar angeordnete Ablagetische (6) mit quer zur Bewegungsrichtung (x) der Ablagetische (6) bewegbaren Schiebern (7), aufweisend
- ein Gestell (2),
- eine Schienenanordnung (9) mit einer ersten Schienenbahn (91) und einer parallel zu dieser verlaufenden zweiten Schienenbahn (92), entlang der die Ablagetische (6) verfahrbar angeordnet sind,
- ein an dem Gestell angeordnetes Führungselement (3) zur Führung eines Mitnehmers (72) der Schieber (7), mit dem die zu befördernden Gegenstände von dem jeweiligen Ablagetisch (6) in Richtung zumindest einer der Schienenbahnen (91, 92) herunterschiebbar sind,
dadurch gekennzeichnet, dass
das Führungselement (3) aus einer Betriebsstellung in eine Entkopplungsstellung absenkbar an dem Gestell (2) festgelegt ist.

## Beschreibung

Die vorliegende Erfindung betrifft eine Entladestation einer Fördervorrichtung für entlang einer Förderstrecke verfahrbar angeordnete Ablagetische gemäß dem Oberbegriff des Anspruchs 1 sowie eine Fördervorrichtung zur Beförderung von Gegenständen gemäß dem Oberbegriff des Anspruchs 9.

Gattungsgemäße Entladestationen und Fördervorrichtungen sind beispielsweise aus der DE 199 598 43 A1 bekannt. Sie werden insbesondere bei Fördervorrichtungen eingesetzt, die der Beförderung von Paketen oder anderen Gegenständen, die auf jeweiligen Ablagetischen aufliegen und entlang einer Förderstrecke bis zu einer Entladestation auf den Ablagetischen liegend transportiert werden. Sobald die Entladestation erreicht ist, dient ein senkrecht zur Förderrichtung an den jeweiligen Ablagetischen bewegbarer Schieber dazu, den zu befördernden Gegenstand vom Ablagetisch auf eine Rutsche, eine weitere Förderstrecke oder dergleichen herunter zu schieben.

Problematisch bei den aus dem Stand der Technik bekannten Entladestationen und Förderrichtungen ist, dass im Falle eines Verklemmens eines mit dem Schieber vom Ablagetisch abzuschiebenden Gegenstandes oder des Schiebers selbst die Fördervorrichtung angehalten und die Verklemmung beseitigt werden muss.

Dies ist insbesondere dadurch erschwert, dass der Schieber, bedingt durch das Zusammenwirken eines am Schieber angebrachten ersten Führungselementes mit einem am Gestell der Entladestation befestigten zweiten Führungselement, beispielsweise in Gestalt einer Kurvenbahn, aus seiner zur Abgabestation hin verschobenen Stellung nur mit großem Aufwand gelöst werden kann. Dazu ist es insbesondere erforderlich, das erste Führungselement von dem Schieber oder das zweite Führungselementes von dem Gestell zu demontieren. Eine solche Demontage ist überdies sehr zeitaufwändig und verzögert die Beförderung zu befördernden Gegenstände in großem Maße.

Aufgabe der vorliegenden Erfindung ist es, eine Entladestation für entlang einer Förderstrecke verfahrbar angeordnete Ablagetische sowie eine Fördervorrichtung bereitzustellen, mit der eine solche Verklemmsituation in einfacher und schneller Weise behoben werden kann.

Diese Aufgabe wird durch eine Entladestation mit den Merkmalen des Anspruchs 1 sowie eine Fördervorrichtung mit den Merkmalen des Anspruchs 9 gelöst.

Die erfindungsgemäße Entladestation weist ein Gestell auf, eine Schienenanordnung mit einer ersten Schienenbahn und einer parallel zu dieser verlaufenden zweiten Schienenbahn, entlang der die Ablagetische verfahrbar angeordnet sind, sowie ein an dem Gestell angeordnetes Führungselement zur Führung eines Mitnehmers der Schieber, mit dem die zu befördernden Gegenstände von dem jeweiligen Ablagetisch in Richtung zumindest einer der Schienenbahnen herunterschiebbar sind.

Dabei ist das zweite Führungselement aus einer Betriebsstellung, in der die Führungselemente miteinander zusammenwirken, in eine Entkopplungsstellung, bei der die Führungselemente voneinander getrennt sind, absenkbar an dem Gestell festgelegt.

Durch die Absenkbarkeit des zweiten Führungselementes ist es ermöglicht, dass der Schieber im Falle eines Festklemmens einer der zu befördernden Gegenstände in einfacher Weise zurückgeschoben werden kann, da das Führungselement des Schiebers außer Eingriff mit dem Führungselement des Gestells ist.

Der verklemmte Gegenstand kann auf diese Art und Weise freigelegt werden und vom Ablagetisch weggenommen werden.

Anschließend kann das zweite Führungselement wieder zurück in seine Betriebsstellung angehoben werden, so dass die Förderung der Gegenstände entlang der Förderstrecke innerhalb kurzer Zeit wieder aufgenommen werden kann.

Vorteilhafte Ausführungsvarianten der Erfindung sind Gegenstand der Unteransprüche.

Gemäß einer vorteilhaften Ausführungsvariante der Erfindung ist das zweite Führungselement um eine parallel zur Längsrichtung der Schienenbahnen verlaufende Drehachse verschwenkbar an dem Gestell festgelegt. Dabei stützt eine verschwenkbar an dem Gestell befestigte Stützeinheit das zweite Führungselement in einer ersten Stützposition in der Betriebsstellung und in einer zweiten Stützposition in der relativ zur Betriebsstellung abgesenkten Entkopplungsstellung ab.

Die verschwenkbare Anbringung des zweiten Führungselements am Gestell ermöglicht eine hinreichende Absenkung des zweiten Führungselementes, die gleichzeitig eine einfach durchzuführende Kopplung und Entkopplung der Führungselemente miteinander erlaubt.

Gemäß einer weiteren Ausführungsvariante der Erfindung weist die Stützeinheit ein um eine parallel zur Längsrichtung der Schienenbahnen verlaufende Drehachse verschwenkbar an dem Gestell festgelegtes und an dem zweiten Führungselement anliegendes Stützelement auf, sowie eine mit dem Stützelement verbundene Steuereinheit zur Verstellung des Stützelements.

Die Steuereinheit ermöglicht dabei eine einfach durchführbare Verstellung des Stützelements.

Die Steuereinheit ist dabei in einer Ausführungsvariante manuell verstellbar, in einer anderen Variante motorisch antreibbar ausgebildet.

Die Steuereinheit weist gemäß einer bevorzugten Ausführungsvariante eine verschwenkbar an dem Gestell befestigte und mit dem Stützelement gekoppelte Stellstange auf.

Die Stellstange ist dabei besonders bevorzugt als Teleskopstange ausgebildet.

Das zweite Führungselement ist gemäß einer bevorzugten Ausführungsvariante als auf einer Platte befestigter Führungssteg ausgebildet, entlang dem der vorzugsweise als Steuerrad ausgebildete Mitnehmer derart führbar ist, dass der Schieber eines jeweiligen Ablagetisches zu einer Entladekante des Ablagetisches hin verschoben wird.

Die erfindungsgemäße Fördervorrichtung zur Beförderung von Gegenständen weist eine Schienenanordnung mit einem Gestell, einer ersten Schienenbahn und einer parallel zu dieser verlaufenden zweiten Schienenbahn auf, entlang der wenigstens ein Ablagetisch, auf den ein zu befördernder Gegenstand auflegbar ist, verfahrbar ist.

Der Ablagetisch ist dabei an der Schienenanordnung gleitend oder rollend gelagert. Der Ablagetisch weist einen quer zur Bewegungsrichtung des Ablagetisches bewegbaren Schieber auf, mit dem der zu befördernde Gegenstand von dem Ablagetisch herunterschiebbar ist.

Auf einer Unterseite des Schiebers ist ein Mitnehmer festgelegt, der mit einem an dem Gestell im Bereich einer Entladestation angeordneten Führungselement koppelbar ist. Das Führungselement ist dabei senkrecht zur Bewegungsrichtung des Ablagetisches und senkrecht zur Bewegungsrichtung des Schiebers aus einer ersten mit dem Mitnehmer gekoppelten Arbeitsstellung in eine von dem Mitnehmer entkoppelten Entkopplungsstellung vom Ablagetisch weg verstellbar an dem Gestell festgelegt.

Anhand der beiliegenden Zeichnungen werden nachfolgend Ausführungsbeispiele der Erfindung näher erläutert. Es zeigen:
Figur 1 eine perspektivische Ansicht einer Ausführungsvariante einer erfindungsgemäßen Entladestation,
Figur 2 eine Teil-Explosionsdarstellung der in Figur 1 gezeigten Entladestation,
Figur 3 eine Seitenansicht der Entladestation und eines Ablagetisches in der Betriebsstellung mit einem in die Entladestellung vorgeschobenem Schieber,
Figur 4 eine Seitenansicht der in Figur 3 gezeigten Entladestation und des Ablagetisches mit in die Entladeposition vorgeschobenem Schieber mit von dem Mitnehmer entkoppeltem, abgesenktem Führungselement und
Figur 5 eine Seitenansicht einer alternativen Ausführungsvariante eines Führungselementes und mit diesem verbundener Stützeinheit und Steuereinheit.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Entladestation, des Gestells, des Schiebers, des Ablagetisches, des Mitnehmers, des Führungselementes und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

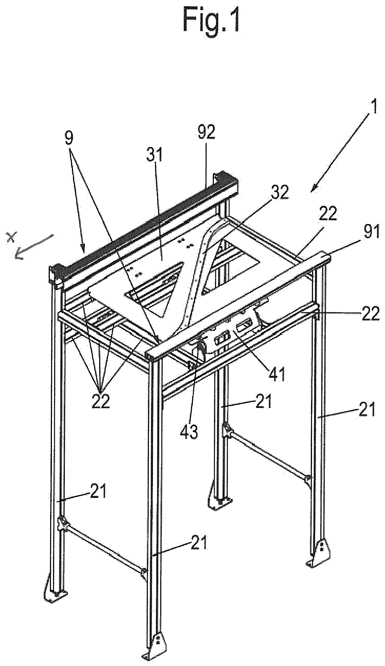

In der Figur 1 ist mit dem Bezugszeichen 1 insgesamt eine Ausführungsvariante einer erfindungsgemäßen Entladestation bezeichnet. Die Entladestation 1 ist dabei Bestandteil einer Fördervorrichtung zur Beförderung von Gegenständen, die auf jeweiligen Ablagetischen 6 der Fördervorrichtung aufliegen und entlang einer Förderstrecke von einer Aufgabestation bis zur Entladestation 1 auf den Ablagetischen 6 transportiert werden.

Die Entladestation 1 weist dabei ein Gestell 2 auf, das vorzugsweise aus einem Metallgestänge mit mehreren Standbeinen 21 und Querstreben 22 aufgebaut ist. An dem Gestell 2 ist eine Schienenanordnung 9 mit einer ersten Schienenbahn 91 und einer parallel zu dieser verlaufenden zweiten Schienenbahn 92 befestigt, die ein Teilstück der Förderstrecke bilden, entlang der die Ablagetische 6 verfahrbar sind.

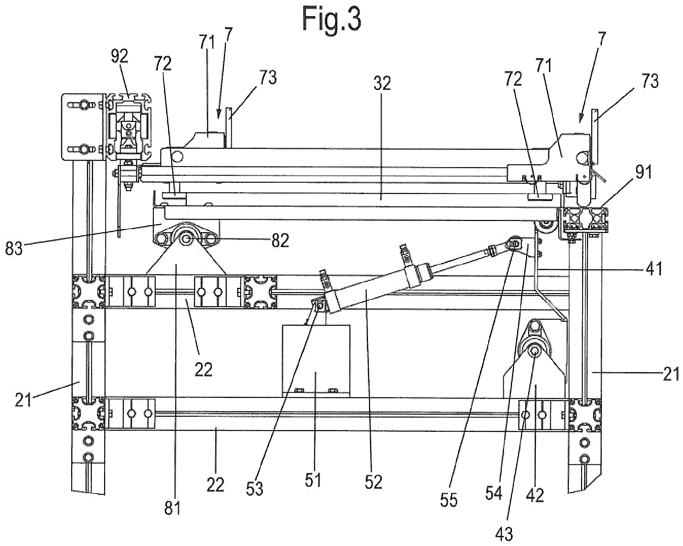

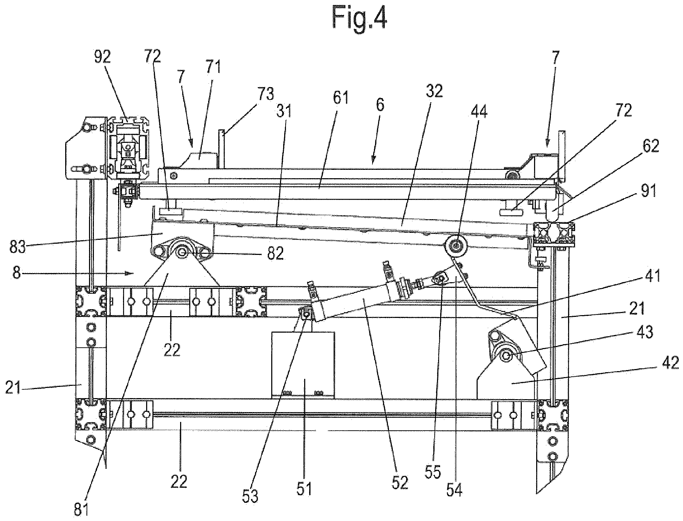

Jeder der Ablagetische 6 weist dabei, wie in den Figuren 3 und 4 dargestellt ist, eine Ablagefläche 61 auf, auf der die zu befördernden Gegenstände auflegbar sind.

An jedem der Ablagetische 6 ist des Weiteren ein senkrecht zur Bewegungsrichtung x des Ablagetisches 6 bewegbarer Schieber 7 verschiebbar festgelegt, mit dem der zu befördernde Gegenstand von dem Ablagetisch 6 über eine parallel zu den Schienenbahnen 91, 92 sich erstreckender Seitenkante des Ablagetisches 6 auf eine Rutsche, eine weitere Förderbahn oder dergleichen abschiebbar ist.

Der Schieber 7 weist dabei eine bevorzugt senkrecht zur Auflagefläche 61 des Ablagetisches 6 und parallel zu den Schienenbahnen 91, 92 sich erstreckende Schubplatte 73 auf, die an einem Schiebergehäuse 71 festgelegt ist. Das Schiebergehäuse 71 erstreckt sich dabei bevorzugt u-förmig um den Ablagetisch 6 herum.

Auf einer Unterseite des Schiebers 7 ist ein vorzugsweise als um eine vertikale Drehachse drehbares Steuerrad ausgebildeter Mitnehmer 72 festgelegt. Dieser Mitnehmer 72 wird, sobald der Ablagetisch 6 die Entladestation 1 erreicht, von einem an dem Gestell 2 befestigten Führungselement 3 von einer Beladeposition in eine der zuvor genannten Kante des Ablagetisches 6 nahe Abschiebeposition geführt und mit diesem der Schieber 7, so dass bei Überfahren eines Ablagetisches 6 der Entladestation 1 der Schieber 7 den auf den Ablagetisch 6 abgelegten Gegenstand von der Auflagefläche 61 des Ablagetisches 6 in Richtung der Schienenbahn 91 von dem Ablagetisch 6 herunter abschiebt.

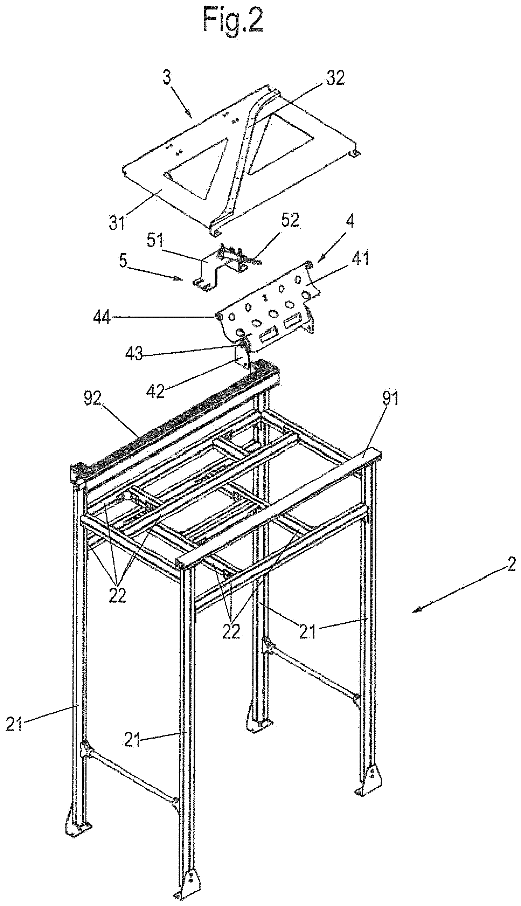

Eine erste Ausführungsvariante eines solchen Führungselementes 3 ist in den Figuren 1-4 dargestellt. Das Führungselement 3 besteht, wie in Figur 2 gut zu erkennen ist, aus einer Platte 31, auf deren dem Ablagetisch 6 zugewandter Oberseite ein sich etwa diagonal über die Platte 31 erstreckender Führungssteg 32 befestigt ist. Denkbar ist auch, den Führungssteg 32 als S-Kurve oder dergleichen zu formen.

Das Führungselement 3 ist, wie in den Figuren 3 und 4 gezeigt, in einem Bereich unterhalb der zweiten Schienenbahn 92 über ein Gelenk 8 mit einem Halter 81 schwenkbar an einem Querträger 22 des Gestells 2 um eine parallel zur Längsrichtung der Schienenbahnen 91, 92 verlaufende Drehachse 82 befestigt, so dass das Führungselement 3 in einer Betriebsposition, gezeigt in Figur 3, parallel zur Verschieberichtung des Mitnehmers 72 des Schiebers 7 ausgerichtet ist, so dass der Mitnehmer 72 eines Schiebers 7 eines sich entlang der Entladestation 1 bewegenden Ablagetisches 6 stets in Kontakt mit dem Führungselement 3 steht.

Um im Bedarfsfall die Kopplung des Mitnehmers 72 des Schiebers 7 mit dem Führungselement 3 zu lösen, ist das Führungselement 3 aus der Betriebsstellung in eine Entkopplungsstellung absenkbar an dem Gestell 2 festgelegt.

Dazu ist in der hier gezeigten bevorzugten Ausführungsvariante das Führungselement 3 in einem Bereich unterhalb der ersten Schienenbahn 91 durch eine Stützeinheit 4 abgestützt.

Die Stützeinheit 4 weist, wie besonders gut in Figur 2 zu erkennen ist, ein als flächiges Blechteil ausgebildetes Stützelement 41 auf, das über ein Schwenkteil 42 um eine parallel zur Längsrichtung der Schienenbahnen 91, 92 verlaufende Drehachse 43 an dem Gestell 2 festgelegt ist. Das Stützelement 41 liegt dabei im eingebauten Zustand der Stützeinheit 4 an dem zweiten Führungselement 3 an.

Zur Absenkung des Führungselementes 3 ist die Stützeinheit 4 mit einer Steuereinheit 5 zur Verstellung des Stützelements 41 verbunden.

Die Steuereinheit 5 besteht dabei im Wesentlichen aus einer verschwenkbar an dem Gestell 2 befestigten und mit dem Stützelement 41 gekoppelten Stellstange 52. Die Stellstange 52 ist dabei zum einen über einen Stützfuß 51 am Gestell 2 um eine parallel zur Längsrichtung der Schienenbahnen 91, 92 verlaufende Drehachse 53 verschwenkbar.

Besonders bevorzugt ist die Stellstange 52 als Teleskopstange ausgebildet, so dass je nach Anbringungsort der Steuereinheit 5 an dem Gestell 2 eine die Verschwenkung des Stützelements 41 ermöglichende Längenveränderung der Stellstange 52 ermöglicht ist.

Die Steuereinheit 5, insbesondere die Stellstange 52 ist dabei besonders bevorzugt motorisch antreibbar ausgebildet. Denkbar ist auch eine manuelle Verstellbarkeit der Steuereinheit 5.

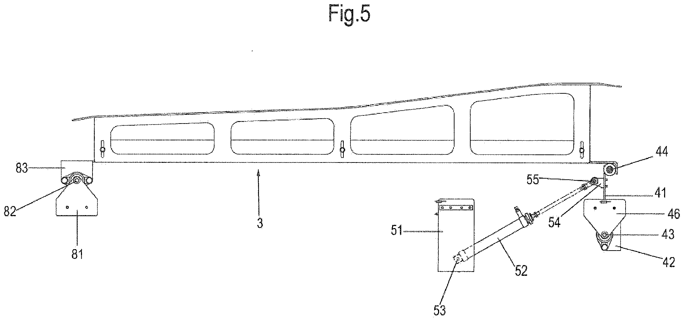

Figur 5 zeigt eine alternative Ausführungsvariante eines Führungselementes 3.

Hier ist insbesondere die Befestigung der Stützeinheit 4 und der Steuereinheit 5 in alternativer Weise gelöst. Insbesondere ist an der Stellstange 52 ein Befestigungskopf 54 angebracht, der mit dem Stützelement 41 gekoppelt ist. Das Drehgelenk 46 der Stützeinheit 4 ist hier derart ausgelegt, dass die Platte 31 des Führungselements 3 in der abgesenkten Position auf einer Querstange 22 des Gestells 2 aufliegt.

Wichtig ist, dass das Führungselement 3 im Bereich der Stirnkante des Ablagetisches 6, bei der der Schieber 7 in Richtung der Abschiebeposition vorgeschoben ist, hinreichend absenkbar ist, um das Führungselement 3 von dem Mitnehmer 72 zu entkoppeln.

Denkbar ist auch eine Entladestation 1 mit in Verschieberichtung der Schieber 7 nebeneinander angeordneten zwei Führungselementen, wobei sich der Schieber 7 je nach Steuerung in Richtung der ersten Schienenbahn 91 oder der zweiten Schienenbahn 92 hin verschieben kann.

In diesem Fall weist die Entladestation 1 entsprechend zwei in Verschieberichtung des Schiebers 2 nebeneinander angeordnete Führungselemente auf, die mittig zwischen den Schienenbahnen 91, 92 verschwenkbar festgelegt sind und im Bereich der Schienenbahnen 91, 92 entsprechend absenkbar sind, um ein Entkoppeln des Mitnehmers 72 des Schiebers 7 oder der Mitnehmer der Schieber bei zwei auf dem Ablagetisch 6 angeordneten Schiebern zu ermöglichen.

### Bezugszeichenliste

- 1: Entladestation

- 2: Gestell
- 21: Standbein
- 22: Quersteg

- 3: Führungselement
- 31: Platte
- 32: Führungssteg

- 4: Stützeinheit
- 41: Stützelement
- 42: Schwenkteil
- 43: Drehachse

- 5: Steuereinheit
- 51: Stützfuß
- 52: Stellstange
- 53: Drehachse
- 54: Befestigungskopf

- 6: Ablagetisch
- 61: Ablagefläche

- 7: Schieber
- 71: Schiebergehäuse
- 72: Mitnehmer
- 73: Schubplatte

- 8: Gelenk
- 81: Halter
- 82: Drehachse

- 9: Schienenanordnung
- 91: erste Schienenbahn
- 92: zweite Schienenbahn
- X: Bewegungsrichtung

## Patentansprüche

1. Entladestation (1) einer Fördervorrichtung für entlang einer Förderstrecke verfahrbar angeordnete Ablagetische (6) mit quer zur Bewegungsrichtung (x) der Ablagetische (6) bewegbaren Schiebern (7), aufweisend
- ein Gestell (2),
- eine Schienenanordnung (9) mit einer ersten Schienenbahn (91) und einer parallel zu dieser verlaufenden zweiten Schienenbahn (92), entlang der die Ablagetische (6) verfahrbar angeordnet sind,
- ein an dem Gestell angeordnetes Führungselement (3) zur Führung eines Mitnehmers (72) der Schieber (7), mit dem die zu befördernden Gegenstände von dem jeweiligen Ablagetisch (6) in Richtung zumindest einer der Schienenbahnen (91, 92) herunterschiebbar sind,
**dadurch gekennzeichnet, dass**
- das Führungselement (3) aus einer Betriebsstellung in eine Entkopplungsstellung absenkbar an dem Gestell (2) festgelegt ist.

2. Entladestation (1) nach Anspruch 1, **dadurch gekennzeichnet, dass** das Führungselement (3) um eine parallel zur Längsrichtung der Schienenbahnen (91, 92) verlaufende Drehachse (82) verschwenkbar an dem Gestell (2) festgelegt ist, wobei eine verschwenkbar an dem Gestell befestigte Stützeinheit (4) das Führungselement (3) in einer ersten Stützposition in der Betriebsstellung und in einer zweiten Stützposition in der relativ zur Betriebsstellung abgesenkten Entkopplungsstellung abstützt.

3. Entladestation (1) nach Anspruch 2, **dadurch gekennzeichnet, dass** die Stützeinheit (4) ein um eine parallel zur Längsrichtung der Schienenbahnen (91, 92) verlaufende Drehachse (43) verschwenkbar an dem Gestell (2) festgelegtes und an dem Führungselement (3) anliegendes Stützelement (41) aufweist, sowie ein mit dem Stützelement (41) verbundene Steuereinheit (5) zur Verstellung des Stützelements (41).

4. Entladestation (1) nach Anspruch 3, **dadurch gekennzeichnet, dass** das Steuereinheit (5) eine verschwenkbar an dem Gestell befestigte und mit dem Stützelement (41) gekoppelte Stellstange (52) aufweist.

5. Entladestation (1) nach Anspruch 4, **dadurch gekennzeichnet, dass** die Stellstange (52) als Teleskopstange ausgebildet ist.

6. Entladestation (1) nach einem der Ansprüche 3 bis 5, **dadurch gekennzeichnet, dass** die Steuereinheit (5) motorisch antreibbar ausgebildet ist.

7. Entladestation (1) nach einem der Ansprüche 3 bis 6, **dadurch gekennzeichnet, dass** an einer dem Führungselement (3) nahen Stirnkante des Stützelements (41) wenigstens eine an dem Führungselement (3) anliegende Gleitrolle (44) angebracht ist.

8. Entladestation (1) nach einem der vorstehenden Ansprüche, **dadurch gekennzeichnet, dass** das Führungselement (3) als auf einer Platte (31) befestigter Führungssteg (32) ausgebildet ist.

9. Fördervorrichtung zur Beförderung von Gegenständen, aufweisend
- eine Schienenanordnung (9) mit einem Gestell (2), einer ersten Schienenbahn (91) und einer parallel zu dieser verlaufenden zweiten Schienenbahn (92), entlang der wenigstens ein Ablagetisch (6), auf den ein zu befördernder Gegenstand auflegbar ist, verfahrbar ist,
- wobei der Ablagetisch (6) an der Schienenanordnung (9) gleitend oder rollend gelagert ist,
- wobei der Ablagetisch (6) einen quer zur Bewegungsrichtung (x) des Ablagetisches (6) bewegbaren Schieber (7) aufweist, mit dem der zu befördernde Gegenstand von dem Ablagetisch (6) herunterschiebbar ist,
- wobei auf einer Unterseite des Schiebers (7) ein Mitnehmer (72) festgelegt ist, der mit einem an dem Gestell (2) im Bereich einer Entladestation (1) angeordneten Führungselement (3) koppelbar ist,
**dadurch gekennzeichnet, dass**
- das Führungselement (3) senkrecht zur Bewegungsrichtung des Ablagetisches (6) und senkrecht zur Bewegungsrichtung des Schiebers (7) aus einer ersten mit dem Mitnehmer (72) gekoppelten Arbeitsstellung in eine von dem Mitnehmer (72) entkoppelten Entkopplungsstellung vom Ablagetisch (6) weg verstellbar an dem Gestell (2) festgelegt ist.
